# EUROPEAN PATENT APPLICATION

(11) **EP 4 607 657 A1**
(43) Date of publication of application: **27.08.2025**
(21) Application number: 24315057.0
(22) Date of filing: 23.02.2024
(51) Int. Cl.: H01M 10/663, H01M 10/625, F25D 3/00, F25D 15/00, H01M 10/6568

(54) **FLUID MANAGEMENT SYSTEM AND IMMERSION-COOLED BATTERY SYSTEM**

(71) Applicant: MANN+HUMMEL GmbH, 71636 Ludwigsburg (DE)
(72) Inventor: Haller, Andreas, 71636 Ludwigsburg (DE); Kravanja, Axel, 71636 Ludwigsburg (DE); Singh, Harsh, 35200 Rennes (FR)
(74) Representative: Mann + Hummel Intellectual Property

(57) **Abstract**

A fluid management system (1) for conditioning a coolant (2) in a coolant circuit (3) of an immersion-cooled battery system (4), includes a pump (5), at least one temperature control element (6, 7), at least one filter element (8, 9), a dehumidifying element (10), and a housing (11) in which the pump (5), the at least one temperature control element (6, 7), the at least one filter element (8, 9) and the dehumidifying element (10) are arranged, the housing (11) including a coolant inlet (12) configured to receive the coolant (2) to be conditioned, a coolant outlet (13) configured to output the conditioned coolant (2), and a coolant path (14) configured to conduct the coolant (2) through the housing (11) in a flow direction D from the coolant inlet (12) to the coolant outlet (13).

## Description

### Technical Field

The invention relates to a fluid management system for conditioning a coolant in a coolant circuit of an immersion-cooled battery system. The invention also relates to the use of such a fluid management system in a coolant circuit of an immersion-cooled battery system.

### Background Art

Battery systems, as they are often used in electromobility today, include a large number of battery cells arranged in an outer housing. Malfunctions in the battery system can sometimes lead to uncontrolled heat generation in the battery system. In addition, the regular charging of such battery systems is also accompanied by heat generation in the individual battery cells, whereby the faster the charging process takes place, the more heat is generated. Excessive or even uncontrolled heat development can cause massive damage to the battery system. In order to keep the battery cells within an optimum temperature range, the corresponding battery systems are cooled.

In order to compete with combustion systems, the automotive industry is endeavoring to shorten the charging times for battery systems. Accordingly, there is a need for improved cooling systems to efficiently dissipate the large amounts of heat generated during the shorter and shorter charging processes in the battery systems. While battery systems have long been cooled indirectly with the aid of cooling plates through which a coolant flows and which are arranged underneath the battery cells, a process known as immersion cooling has also been used in recent times. In this process, a coolant in a coolant circuit is introduced into the housing of the battery system and passed through it in such a way that the coolant flows directly around the individual battery cells and immerses them in it. Due to the direct contact between the coolant and the individual battery cells and the large contact surface, the heat is removed very efficiently, but at the same time special requirements must be placed on the quality of the coolant in order to ensure safe operation of the battery system. For example, the temperature of the coolant and the pressure in the coolant circuit must be monitored and adjusted if necessary, and the coolant must be kept free of dirt particles. The moisture content of the coolant is also a key criterion. If the coolant contains too much water, there is a risk of a short circuit within the battery system due to the resulting increased electrical conductivity of the coolant. In addition, the individual battery cells are exposed to an increased risk of corrosion due to condensed water,

In the state of the art, it is already known, for example from US 11,482,741 B2, to lead the coolant circulating in a coolant circuit out of the battery housing for conditioning and to allow it to pass through various treatment elements, such as a cooler, a filter and/or a water separator, before the conditioned coolant is reintroduced into the battery housing. In addition to the aforementioned and other treatment elements, it may be necessary to arrange suitable sensors in the coolant circuit in order to be able to monitor the condition of the coolant. A large number of individual components are therefore required, which must be integrated into the coolant circuit to monitor and treat the coolant in order to optimize the operation of the battery system.

### Summary

It is the object of the present invention to provide a system which facilitates the conditioning of a coolant in a coolant circuit of an immersion-cooled battery system.

This problem is solved by a fluid management system according to patent claim 1 and by the use of such a fluid management system according to patent claim 10.

Advantageous embodiments and further developments of the invention are the subject of the dependent claims.

According to patent claim 1, the invention is a fluid management system for conditioning a coolant in a coolant circuit of an immersion-cooled battery system, including a pump, at least one temperature control element, at least one filter element, a dehumidifying element, and a housing in which the pump, the at least one temperature control element, the at least one filter element and the dehumidifying element are arranged. The housing includes a coolant inlet configured to receive the coolant to be conditioned, a coolant outlet configured to output the conditioned coolant, and a coolant path configured to conduct the coolant through the housing in a flow direction D from the coolant inlet to the coolant outlet.

In other words, the invention proposes a fluid management system for conditioning the coolant in a coolant circuit of an immersion-cooled battery system, in which all treatment elements required for conditioning the coolant are arranged within a compact housing, through which the coolant can be passed with the aid of a pump also arranged in the housing. For this purpose, an outlet of the battery housing can be connected to the coolant inlet of the housing of the fluid management system and an inlet of the battery housing can be connected to the coolant outlet of the housing of the fluid management system. The fluid management system according to the invention thus combines numerous components and functions required for optimum treatment of the coolant in a single compact housing, which can be easily connected to the battery housing of the battery system. The complex embedding of numerous individual components into the coolant circuit, which was previously required to ensure optimum fluid quality, can be omitted. The handling of such an immersion-cooled battery system is thus significantly facilitated by the fluid management system according to the invention.

One embodiment of the invention provides for several temperature control elements to be provided in the housing. In particular, the at least one temperature control element may include a cooling element configured to cool the coolant, and a heating element configured to heat the coolant. The fluid management system may further include at least one temperature sensor arranged in the housing and connected upstream of the cooling element and the heating element, the at least one temperature sensor being configured to detect a temperature T of the coolant. The cooling element may be arranged in a first partial section of the coolant path. The heating element may be arranged in a second partial section of the coolant path extending parallel to the first partial section. A third partial section of the coolant path may be arranged parallel to the first partial section and the second partial section, and may be configured to be a bypass for the coolant of the cooling element and the heating element. The fluid management system may further include at least one valve arranged in the housing and configured to regulate a flow of the coolant through the first partial section, the second partial section, and the third partial section as a function of the temperature T of the coolant detected by the at least one temperature sensor.

The temperature of the coolant introduced into the battery housing is of crucial importance for the proper operation of the battery system. It is therefore necessary to monitor and, if necessary, adjust the temperature of the coolant during the conditioning of the coolant. In general, the coolant absorbs heat energy emitted by the battery cells as it flows through the battery housing, so that it heats itself up. In the course of conditioning the coolant, the absorbed heat must be removed from the coolant before it is reintroduced into the battery housing of the battery system. For this purpose, a cooling element can be provided in the housing of the fluid management system, through which the coolant is passed and through which excess heat energy can be dissipated. Depending on the specific conditions, in particular the ambient temperature, it may also be necessary to heat the coolant in the course of conditioning so that its temperature is again within a temperature range specified for optimum functioning of the battery system. For this purpose, the fluid management system can include a heating element arranged in the housing in addition to the cooling element, through which the coolant can pass and thus be heated. The cooling element is arranged in a first partial section of the coolant path and the heating element in a second partial section of the coolant path that runs parallel to the first partial section. A temperature sensor connected upstream of the heating element and the cooling element is used to detect the temperature of the coolant. In addition, a valve is provided which regulates the flow of coolant through the heating element or through the cooling element depending on the detected temperature of the coolant. Finally, it is also possible that the temperature of the coolant detected by the temperature sensor is already within the specified temperature range. In this case, the coolant is channeled through a further third partial section of the coolant path, which runs parallel to the first and second partial sections of the coolant path and is designed as a bypass, in which the temperature of the coolant remains unchanged. A further valve can be provided for this purpose, which releases the flow through the third partial section.

In accordance with the invention, the at least one valve may be further configured to allow the coolant to pass through the first partial section and through the cooling element, in response to the detected temperature T of the coolant being greater than 35 °C, and allow the coolant to pass through the second partial section and through the heating element, in response to the detected temperature T of the coolant being less than -5 °C. The at least one valve may be further configured to allow the coolant to pass through the third partial section and bypass the cooling element and the heating element, in response to the detected temperature T of the coolant being greater than -5 °C and less than 35 °C.

According to a further embodiment of the invention, the at least one filter element may include a pre-filter and a main filter configured to remove dirt particles from the coolant. The pre-filter may be connected upstream of the pump, and the main filter may be connected downstream of the at least one temperature control element. The pre-filter can be a simple sieve, for example, which serves to protect the pump by removing coarser dirt particles from the coolant. The main filter can be designed in such a way that smaller dirt particles are also reliably removed from the coolant before it is reintroduced into the battery housing.

The fluid management system according to the invention may further include an expansion tank arranged in the housing and configured to receive the coolant received by the coolant inlet. The volume of the coolant circulating in the coolant circuit can vary depending on its temperature. The volume of the expansion tank, which can be arranged directly behind the coolant inlet of the housing, is dimensioned such that varying coolant volumes can be accommodated without causing an excessive pressure increase or pressure drop in the coolant circuit.

For this purpose, wherein the fluid management system may further include a venting element configured to provide pressure compensation for the expansion tank. The venting element and the dehumidifying element may be arranged on the expansion tank. The dehumidifying element may be configured to remove moisture from air flowing in from outside through the venting element. The venting element can, for example, be designed as a venting cap and include valve-controlled openings through which ambient air can enter the expansion tank or air can escape from the expansion tank to the outside. At the same time, the dehumidifying element ensures that no additional moisture is introduced into the coolant via the ambient air flowing in from outside, which would increase the conductivity of the coolant in an undesirable manner.

According to one embodiment, the venting element and the dehumidifying element may be detachably connected to each other to form a unit.

It may also be provided that the fluid management system may further include a conductivity sensor arranged in the housing and configured to measure a conductivity of the coolant. In particular, an output signal from the conductivity sensor can be used to control the dehumidifying element.

In embodiments, the fluid management system may further include a pressure relief valve arranged between the coolant circuit and the expansion tank and configured to drain the coolant into the expansion tank for pressure reduction.

Finally, the invention also relates to an immersion-cooled battery system including the fluid management system according to one of claims 1 to 9, the coolant circuit in which the fluid management system is arranged, and a battery housing in which battery cells are arranged. The coolant flows around the battery cells, and the battery housing includes an outlet connected to the coolant inlet of the housing of the fluid management system, and an inlet connected to the coolant outlet of the housing of the fluid management system.

### Brief Description of Drawings

In the following, the invention is explained in more detail with reference to an embodiment example shown in the attached drawing.

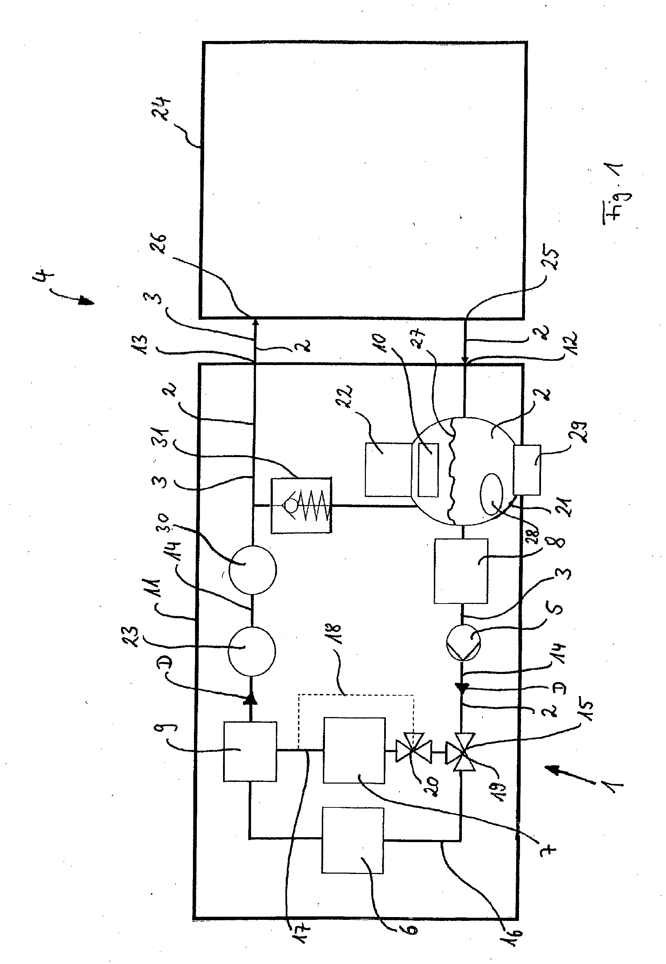

Fig. 1 is a schematic representation of an embodiment example of the fluid management system according to the invention.

### Description of Embodiments

Fig. 1 shows a schematic representation of an embodiment example of the fluid management system 1 according to the invention. The fluid management system 1 is used to condition a coolant 2, which circulates in a coolant circuit 3 of an immersion-cooled battery system 4. The immersion-cooled battery system 4 includes a battery housing 24 with battery cells arranged therein, which are not shown individually in Fig. 1. The battery cells are cooled by immersion. For this purpose, a coolant 2 is introduced into the battery housing 24 through an inlet 26 in such a way that the battery cells are completely immersed in the coolant 2 and are directly surrounded by it. The coolant 2 can exit the battery housing 24 again through an outlet 25.

To protect the battery cells and maintain their full functionality, the coolant 2 must fulfil strict requirements, particularly with regard to its temperature T, pressure and moisture content. For this reason, the fluid management system 1 is integrated into the coolant circuit 3 for continuous conditioning of the coolant 2. The fluid management system 1 is designed as a compact module in which all the treatment elements required for the conditioning of the coolant 2, which are explained in more detail below, are arranged within a common outer housing 11. The housing 11 is connected to the battery housing 24 in that the outlet 25 of the battery housing 24 is connected to a coolant inlet 12 of the housing 11 and the inlet 26 of the battery housing 24 is connected to a coolant outlet 13 of the housing 11. In this way, coolant 2 to be conditioned can be fed into the housing 11 through the coolant inlet 12, while conditioned coolant 2 can be fed back out of the housing 11 through the coolant outlet 13 and into the battery housing 24.

Between the coolant inlet 12 and the coolant outlet 13, the coolant 2 is guided along a coolant path 14 in a flow direction D through the housing 11 with the aid of a pump 5.

Several elements for conditioning the coolant 2 are arranged inside the housing 11. A cooling element 6 and a heating element 7 are integrated into the coolant circuit 3 to adjust the temperature T of the coolant 2. The cooling element 6 is arranged in a first partial section 16 of the coolant path 14, while the heating element 7 is arranged in a second partial section 17 of the coolant path 14. The two partial sections 16 and 17 of the coolant path 14 run parallel to each other. A further third partial section 18 of the coolant path 14 also runs parallel to the two partial sections 16 and 17 and is designed as a bypass. A temperature sensor 15 is connected upstream of the temperature control elements 6, 7, which is integrated into a valve 19 in the embodiment example shown in Fig. 1, but can in principle also be designed independently of this. The valve 19 and a further valve 20 regulate the flow of the coolant 2 through the three parallel partial sections 16, 17, 18 depending on the temperature T of the coolant 2 detected by the temperature sensor 15. In the embodiment example shown, the coolant 2 is passed through the first partial section 16 and through the cooling element 6 if the temperature sensor 15 detects a temperature T > 35 °C of the coolant 2. The coolant 2 is cooled by the cooling element 6 until its temperature returns to a predetermined setpoint range. The coolant 2 is passed through the second partial section 17 and through the heating element 7 if the temperature sensor 15 detects a temperature T < -5 °C of the coolant 2. In this case, the coolant 2 is heated by the heating element 7 until its temperature returns to a predetermined setpoint range. If the temperature sensor 15 detects a temperature T of the coolant 2 for which the following applies: -5 °C < T < 35 °C, the coolant 2 is passed through the third partial section 18 of the coolant path 14, which is designed as a bypass, the temperature of the coolant 2 not being affected.

Two filter elements 8, 9 are arranged in the housing 11 to remove dirt particles from the coolant 2. A pre-filter 8 is arranged upstream of the pump 5 in the flow direction D and serves to remove coarse dirt particles from the coolant 2 to protect the pump 5. The pre-filter 8 is designed as a simple sieve. A main filter 9 is arranged downstream of the temperature control elements 6, 7 in the flow direction D and is designed to filter out also smaller dirt particles from the coolant 2 to protect the battery cells.

Directly behind the coolant inlet 12, an expansion tank 21 is arranged in the housing 11, which serves to receive the coolant 2. The volume of the expansion tank 21 is dimensioned in such a way that temperature-related variations in the volume of the coolant 2 can be accommodated without causing an excessive increase or decrease in pressure in the coolant circuit 3. In the illustration in Fig. 1, a certain coolant level 27 is indicated. The expansion tank 21 is filled with air above the surface of the coolant 2. This air-filled volume can generally receive coolant 2 if the coolant 2 expands due to temperature.

A venting element 22 serving for pressure compensation and a dehumidifying element 10 are arranged on the expansion tank 21. The venting element 22 is designed as a venting cap sitting on the expansion tank 21 and includes valve-controlled openings through which ambient air can enter the expansion tank 21 or air can escape from the expansion tank 21 to the outside. Air entering the expansion tank 21 from the outside can introduce moisture into the coolant circuit 3, which would increase the conductivity of the coolant 2 in an undesirable manner. For this purpose, the dehumidifying element 10 is arranged in the expansion tank 21. It can be designed as an air dryer, for example, which directly removes the moisture from the air flowing in from outside through the venting element 22.

The venting element 22 and the dehumidifying element 10 can be detachably connected to each other to form a unit. This allows the supplied ambient air to be dehumidified in a particularly efficient manner.

A level sensor 28 and a drain plug 29 for controlled draining of coolant 2 can also be arranged in the expansion tank 21.

Furthermore, a conductivity sensor 23 and a pressure and temperature sensor 30 are integrated into the coolant circuit 3. The sensors 23 and 30 are connected downstream of the temperature control elements 6, 7 and the filter elements 8, 9 and serve to protect the battery cells by additionally monitoring the temperature, pressure and conductivity of the conditioned coolant 2 before it is fed back into the battery housing 24. Finally, a pressure relief valve 31 is provided, via which coolant 2 can be drained into the expansion tank 21 for the purpose of pressure reduction.

### Reference Signs List

| | |
|---|---|
| Fluid management system | 1 |
| Coolant | 2 |
| Coolant circuit | 3 |
| Immersion-cooled battery system | 4 |
| Pump | 5 |
| Temperature control element / cooling element | 6 |
| Temperature control element / heating element | 7 |
| Filter element / pre-filter | 8 . |
| Filter element / main filter | 9 |
| Dehumidifying element | 10 |
| Housing | 11 |
| Coolant inlet | 12 |
| Coolant outlet | 13 |
| Coolant path | 14 |
| Temperature sensor | 15 |
| First partial section | 16 |
| Second partial section | 17 |
| Third partial section | 18 |
| Valve | 19 |
| Valve | 20 |
| Expansion tank | 21 |
| Venting element | 22 |
| Conductivity sensor | 23 |
| Battery housing | 24 |
| Outlet | 25 |
| Inlet | 26 |
| Coolant level | 27 |
| Level sensor | 28 |
| Drain plug | 29 |
| Pressure and temperature sensor | 30 |
| Pressure relief valve | 31 |

## Claims

1. A fluid management system (1) for conditioning a coolant (2) in a coolant circuit (3) of an immersion-cooled battery system (4), the fluid management system (1) comprising:
a pump (5);
at least one temperature control element (6, 7);
at least one filter element (8, 9);
a dehumidifying element (10); and
a housing (11) in which the pump (5), the at least one temperature control element (6, 7), the at least one filter element (8, 9) and the dehumidifying element (10) are arranged, the housing (11) comprising a coolant inlet (12) configured to receive the coolant (2) to be conditioned, a coolant outlet (13) configured to output the conditioned coolant (2), and a coolant path (14) configured to conduct the coolant (2) through the housing (11) in a flow direction D from the coolant inlet (12) to the coolant outlet (13).

2. The fluid management system (1) according to claim 1, wherein the at least one temperature control element (6, 7) comprises a cooling element (6) configured to cool the coolant (2), and a heating element (7) configured to heat the coolant (2),
the fluid management system (1) further comprises at least one temperature sensor (15) arranged in the housing (11) and connected upstream of the cooling element (6) and the heating element (7), the at least one temperature sensor (15) being configured to detect a temperature T of the coolant (2),
the cooling element (6) is arranged in a first partial section (16) of the coolant path (14),
the heating element (7) is arranged in a second partial section (17) of the coolant path (14) extending parallel to the first partial section (16),
a third partial section (18) of the coolant path (14) is arranged parallel to the first partial section (16) and the second partial section (17), and is configured to be a bypass for the coolant (2) of the cooling element (6) and the heating element (7), and
the fluid management system (1) further comprises at least one valve (19, 20) arranged in the housing (11) and configured to regulate a flow of the coolant (2) through the first partial section (16), the second partial section (17), and the third partial section (18) as a function of the temperature T of the coolant (2) detected by the at least one temperature sensor (15).

3. The fluid management system (1) according to claim 2, wherein the at least one valve (19, 20) is further configured to:
allow the coolant (2) to pass through the first partial section (16) and through the cooling element (6), in response to the detected temperature T of the coolant (2) being greater than 35 °C;
allow the coolant (2) to pass through the second partial section (17) and through the heating element (7), in response to the detected temperature T of the coolant (2) being less than -5 °C; and
allow the coolant (2) to pass through the third partial section (18) and bypass the cooling element (6) and the heating element (7), in response to the detected temperature T of the coolant (2) being greater than -5 °C and less than 35 °C.

4. The fluid management system (1) according to one of claims 1 to 3, wherein the at least one filter element (8, 9) comprises a pre-filter (8) and a main filter (9) configured to remove dirt particles from the coolant (2),
the pre-filter (8) is connected upstream of the pump (5), and
the main filter (9) is connected downstream of the at least one temperature control element (6, 7).

5. The fluid management system (1) according to one of claims 1 to 4, wherein the fluid management system (1) further comprises an expansion tank (21) arranged in the housing (11) and configured to receive the coolant (2) received by the coolant inlet (12).

6. The fluid management system (1) according to claim 5, wherein the fluid management system (1) further comprises a venting element (22) configured to provide pressure compensation for the expansion tank (21),
the venting element (22) and the dehumidifying element (10) are arranged on the expansion tank (21), and
the dehumidifying element (10) is configured to remove moisture from air flowing in from outside through the venting element (22).

7. The fluid management system (1) according to claim 6, wherein the venting element (22) and the dehumidifying element (10) are detachably connected to one another to form a unit.

8. The fluid management system (1) according to one of claims 1 to 7, wherein the fluid management system (1) further comprises a conductivity sensor (23) arranged in the housing (11) and configured to measure a conductivity of the coolant (2).

9. The fluid management system (1) according to one of claims 1 to 8, wherein the fluid management system (1) further comprises a pressure relief valve (31) arranged between the coolant circuit (3) and the expansion tank (21) and configured to drain the coolant (2) into the expansion tank (21) for pressure reduction.

10. An immersion-cooled battery system (4) comprising:
the fluid management system (1) according to one of claims 1 to 9;
the coolant circuit (3) in which the fluid management system (1) is arranged; and
a battery housing (24) in which battery cells are arranged, the coolant (2) flowing around the battery cells, and the battery housing (24) comprising an outlet (25) connected to the coolant inlet (12) of the housing (11) of the fluid management system (1), and an inlet (26) connected to the coolant outlet (13) of the housing (11) of the fluid management system (1).
